# EUROPEAN PATENT APPLICATION

(11) **EP 4 749 450 A1**
(43) Date of publication of application: **27.05.2026**
(21) Application number: 24845241.9
(22) Date of filing: 14.06.2024
(51) Int. Cl.: G06F 9/50, G06F 9/455

(54) **CONTROL DEVICE, PROGRAM, AND SYSTEM**

(30) Priority: 21.07.2023 JP 2023119222
(71) Applicant: Softbank Corp., Tokyo 105-7529 (JP)
(72) Inventor: KAWAI Yuto, Tokyo 105-7529 (JP)
(74) Representative: Dilg, Haeusler, Schindelmann Patentanwaltsgesellschaft mbH
(86) International application number: PCT/JP2024/021672
(87) International publication number: WO 2025/022859

(57) **Abstract**

Provided is a control device comprising a vRAN execution unit that executes a vRAN function, which is a function of a vRAN, by using resources of a CPU and resources of a GPU and a RAN Al execution unit that executes a RAN AI function, which is an Al function related to control of the vRAN, by using resources of the GPU, and a management unit that manages assignment of resources of the GPU to the vRAN execution unit and the RAN AI execution unit. Provided is a system comprising the control device, the CPU, and the GPU.

## Description

### BACKGROUND

### 1. TECHNICAL FIELD

The present invention relates to a control device, a program, and a system.

### 2. RELATED ART

Patent document 1 describes a GPU virtualization method and system based on a container that is capable of dynamically assigning and sharing GPU resources.

### RELATED ART DOCUMENTS

### Patent Document

[Patent Document 1] Japanese Translation of PCT International Application Publication No. 2020-537197

### GENERAL DISCLOSURE

According to an embodiment of the present invention, a control device is provided. The control device may include a vRAN execution unit that executes a vRAN function, which is a function of a vRAN (Virtual Radio Access Network), by using resources of a CPU (Central Processing Unit) and resources of a GPU (Graphics Processing Unit). The control device may include a RAN Al execution unit that executes a RAN Al function, which is an Al (Artificial Intelligence) function related to control of the vRAN, by using resources of the GPU.

The control device may include a management unit that performs control such that resources of the GPU are preferentially assigned to the vRAN execution unit, among the vRAN execution unit and the RAN Al execution unit. In the control device, the management unit may monitor processing load of the GPU when the vRAN execution unit executes the vRAN function by using the CPU and the GPU, and when the processing load of the GPU becomes lower than a predetermined threshold, increase an amount of resources of the GPU to be assigned to the RAN Al execution unit. The management unit may monitor processing load of the GPU in a state where resources of the CPU and resources of the GPU are assigned to the vRAN execution unit to execute the vLAN function while the RAN Al execution unit is set to be in a state where it is caused not to execute the RAN Al function, and when the processing load of the GPU becomes lower than a predetermined threshold, the management unit may assign resources of the GPU to the RAN Al execution unit to cause the RAN Al execution unit to start execution of the RAN AI function. The management unit may assign resources of the CPU and resources of the GPU to the vRAN execution unit to execute the vLAN function assign resources of the GPU, the amount of which being less than the amount assigned to the vRAN execution unit, to the RAN Al execution unit to execute the RAN Al function, and monitor processing load of the GPU, and when the processing load of the GPU becomes lower than a predetermines threshold, add resources of the GPU assigned to the RAN AI execution unit to enhance the RAN Al function.

In any of the control devices, in a case where the processing load of the vRAN execution unit is higher than a predetermined threshold, the management unit may increase an amount of resources of the GPU to be assigned to the vRAN execution unit when processing load for signal processing of a physical layer by the vRAN execution unit is determined to be higher than a predetermined threshold, and increase an amount of resources of the GPU to be assigned to the RAN Al execution unit when processing load for connection processing, by the vRAN execution unit, for a connection request from a mobile communication terminal at the vRAN is determined to be higher than a predetermined threshold.

In any of the control devices, the management unit may increase an amount of resources of the GPU to be assigned to the RAN Al execution unit in a case where the vRAN is predicted to be congested when the vRAN execution unit is executing the vRAN function by using resources of the CPU and resources of the GPU. The management unit may assign resources of the CPU and resources of the GPU to the vRAN execution unit to execute the vLAN function and set the RAN Al execution unit to be in a state where it is caused not to execute the RAN Al function, and based on an execution status of the vRAN, may predict whether or not the vRAN is congested, and when the vRAN is predicted to be congested, increase an amount of resources of the GPU to be assigned to the RAN AI execution unit to start execution of the RAN Al function. The management unit may execute a measure when the vRAN is determined to be congested by the RAN Al function. When the vRAN is determined to be congested by the RAN Al function, the management unit may perform control such that offload processing is executed in which the mobile communication terminal is handed over from a wireless communication cell served by said vRAN. When the vRAN is determined to be congested by the RAN Al function, the management unit may perform control such that the assignment of resources of the GPU to the RAN Al execution unit to be stopped and to assign that amount to the vRAN execution unit. When the vRAN is determined to be congested by the RAN Al function, the management unit may execute a measure according to the remaining amount of wireless resources at the vRAN. In a case where the vRAN is determined to be congested by the RAN AI function, the management unit may perform control such that when a remaining amount of wireless resources at the vRAN is larger than a predetermined threshold, the assignment of resources of the GPU to the RAN Al execution unit is stopped and that amount is assigned to the vRAN execution unit, and when the remaining amount of the wireless resources is less than the threshold, offload processing is executed in which the mobile communication terminal is handed over from a wireless communication cell served by said vRAN. The management unit may assign resources of the CPU and resources of the GPU to the vRAN execution unit to execute the vLAN function, assign resources of the GPU, the amount of which being less than the amount assigned to the vRAN execution unit, to the RAN Al execution unit to execute the RAN AI function, predict whether or not the vRAN is congested by the RAN Al function, and when the vRAN is determined to be congested, execute a measure. When the vRAN is determined to be congested, the management unit may perform control such that offload processing is executed in which the mobile communication terminal is handed over from the wireless communication cell served by said vRAN. When the vRAN is determined to be congested, the management unit performs control such that the assignment of resources of the GPU to the RAN AI function is stopped, and that amount is assigned to the vRAN function. When the vRAN is determined to be congested, the management unit may execute a measure according to a remaining amount of wireless resources at the vRAN. In a case where the vRAN is determined to be congested, the management unit may perform control such that, when the remaining amount of the wireless resources is larger than a predetermined threshold, the assignment of resources of the GPU to the RAN Al execution unit is stopped and that amount is assigned to the vRAN execution unit, and when the remaining amount of the wireless resources is less than the threshold, offload processing is executed in which the mobile communication terminal is handed over from the wireless communication cell served by said vRAN.

Any of the control devices may function as a Near-RT (Real Time) RIC (RAN Intelligent Controller). In the control device, the RAN Al execution unit may execute, by using resources of the GPU, inference processing related to control of the RUN using a trained model acquired from a Non-RT RIC. In the control device, the RAN Al execution unit may update the trained model by executing machine learning using data related to the vRAN. The RAN Al execution unit may execute the inference processing using the trained model that is updated. The RAN AI execution unit may update, by executing machine learning using various types of data collected from a RAN node at a shorter cycle than the Non-RT RIC, the trained model acquired from the Non-RT RIC, and execute control of the RAN node using the updated trained model and the data collected from the RAN node.

Any of the control devices may include a service execution unit that executes, by using the GPU, a service provision function, which is a function of providing a service for a mobile communication terminal that accesses the vRAN. In the control device, the management unit may perform control such that resources of the GPU is preferentially assigned to the vRAN execution unit, the RAN AI execution unit, the service execution unit in this order, among the vRAN execution unit, the RAN Al execution unit, and the service execution unit. The service execution unit may execute a MEC function. The management unit may assign resources of the CPU and resource of the GPU to the vRAN execution unit to execute the vRAN function, monitor processing load of the GPU, and when the processing load of the GPU becomes lower than a predetermined threshold, increase an amount of resource of the GPU to be assigned to the RAN Al execution unit to start execution of the RAN AI function, monitor an amount of unused resources of the GPU, and when the amount of unused resources is larger than a predetermined threshold, assign resources of the GPU to the service execution unit to execute the service provision function. The management unit may assign resources of the CPU and resources of the GPU to the vRAN execution unit to execute the vRAN function, assign resources of the GPU, the amount of which being less than the assigned amount of resources of the GPU to the vRAN execution unit, to the RAN AI execution unit to execute the RAN Al function, assign resources of the GPU, the amount of which being less than the assigned amount of resources of the GPU to the RAN Al execution unit, to the service execution unit to execute the service provision function, monitor processing load of the vRAN execution unit, and when the processing load of the vRAN execution unit is lower than a predetermined threshold, increase the assigned amount of resources of the GPU to the RAN AI execution unit or increase the assigned amount of resources of the GPU to the RAN Al execution unit and the service execution unit. When the processing load of the vRAN execution unit is higher than the predetermined threshold, the management unit may reduce the assigned amount of resources of the GPU to the service execution unit, or to the service execution unit and the RAN Al execution unit and assign that amount to the vRAN execution unit.

According to an embodiment of the present invention, a program is provided. The program may cause a computer to function as the control device.

According to an embodiment of the present invention, a system is provided. The system may include the control device, the CPU, and the GPU.

The summary clause does not necessarily describe all necessary features of the embodiments of the present invention. The present invention may also be a sub-combination of the features described above.

### BRIEF DESCRIPTION OF THE DRAWINGS

Fig. 1 is an illustration to describe the conventional art.
Fig. 2 is an expected view where a GPU is expected to be used for the RAN control in the conventional art.
Fig. 3 is an illustration to describe an example of a configuration of a control device 100.
Fig. 4 is an illustration to describe an example of a configuration of a control device 100.
Fig. 5 is an illustration to describe an example of a configuration of a control device 100.
Fig. 6 schematically illustrates an example of a functional configuration of a control device 100.
Fig. 7 schematically illustrates an example of a flow of the process performed by the control device 100.
Fig. 8 schematically illustrates an example of a hardware configuration of a computer 1200 that functions as the control device 100.

### DESCRIPTION OF EXEMPLARY EMBODIMENTS

The present invention will be described below through embodiments of the invention, but the following embodiments do not limit the invention according to the claims. In addition, not all of the combinations of features described in the embodiments are essential to the solving means of the invention.

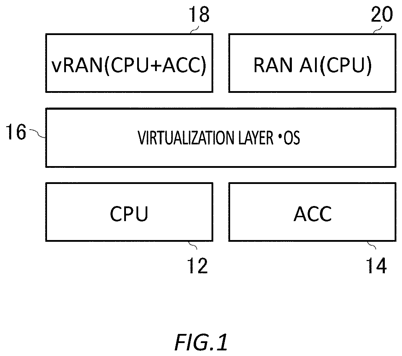

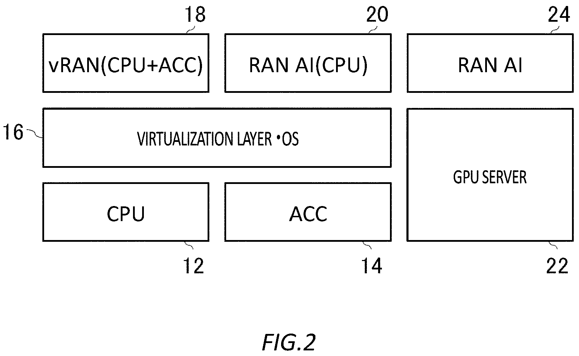

Fig. 1 is an illustration to describe the conventional art. Fig. 2 is an expected view where a GPU is expected to be used for the RAN control in the conventional art.

Conventionally, a vRAN in which a RAN is virtualized is known. In a general vRAN, signal processing is offloaded to hardware such as an ACC (Accelerator), and a function of the vRAN (may be described as a vRAN function) is executed by the CPU and the ACC. In addition to the vRAN function, when it is desired to execute a RAN function using Al (which may be described as a RAN AI function), such as an RIC, since it is difficult to execute the RAN Al function by the ACC, the CPU will execute the RAN AI function.

For example, as illustrated in Fig. 1, a virtualization layer ·OS16 is configured on the CPU 12 and the ACC 14, and the function of the vRAN 18 and the function of the RAN AI 20 are executed on the virtualization layer ·OS16. Resources of the CPU 12 and resources of the ACC 14 are assigned to the vRAN 18, and the vRAN 18 is executed by the CPU 12 and the ACC 14. Resources of the CPU 12 are assigned to the RAN Al 20, and the RAN Al 20 is executed by the CPU 12.

Although using a GPU to reduce the load of the CPU 12 and to make the RAN Al function efficient can be considered, it is necessary to prepare a separate GPU server 22, as illustrated in Fig. 2. Although a GPUvRAN that offloads signal processing of the vRAN to the GPU is known, a RAN AI function is not taken into account in the GPUvRAN.

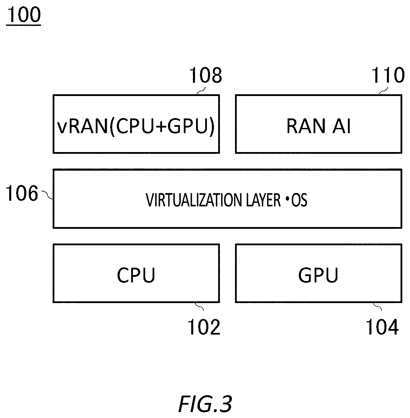

Fig. 3 schematically illustrates an example of a configuration of a control device 100 according to the present embodiment. The control device 100 in the example illustrated in Fig. 3 includes a CPU 102 and a GPU 104, and a virtualization layer ·OS 106 is configured on the CPU 102 and the GPU 104 to execute a function of a vRAN 108 and a function of a RAN AI 110 on a virtualization layer ·OS106. In the control device 100, the vRAN function is executed by using resources of the CPU 102 and resources of the GPU 104, and the RAN Al function is executed by using resources of the GPU 104.

The control device 100 may preferentially assign resources of the GPU 104 to the vRAN 108, among the vRAN 108 and the RAN Al 110.

For example, the control device 100 usually assigns resources of the CPU 102 and resources of the GPU 104 to the vRAN function to execute the vRAN function, and when processing load of the GPU 104 becomes lower than a predetermined threshold, increases an amount of resources of the GPU 104 to be assigned to the RAN Al 110 to start execution of the RAN Al function. In this manner, while the vRAN function is stably executed, the RAN Al function can be executed when the load of the vRAN function is low. By stably executing the vRAN function, improvement of the quality of service or the like can be achieved by the RAN Al function, while a stable communication service is provided to a mobile communication terminal that accesses the vRAN.

In addition, for example, the control device 100 usually assigns resources of the CPU 102 and resources of the GPU 104 to the vRAN 108 to execute the vRAN function, and assigns resources of the GPU 104, the amount of which being less than the assigned amount of resources of the GPU 104 to the vRAN 108, to the RAN Al 110 to execute the RAN AI function. The control device 100 then increases the assigned amount of resources of the GPU 104 to the RAN Al 110 when the processing load of the vRAN function becomes lower than the predetermined threshold. In this manner, achieving improvement or the like of the quality of service through the RAN Al function while stably executing the vRAN function, and enhancing the RAN Al function when the load of the vRAN function is low to contribute to the improvement or the like of the quality of service or the like can be achieved.

In addition, for example, the control device 100 usually assigns resources of the CPU 102 and resources of the GPU 104 to the vRAN function to execute the vRAN function, and based on the execution status of the vRAN, predicts whether or not the vRAN is congested. When the vRAN is predicted to be congested, the control device 100 increases an amount of resources of the GPU 104 to be assigned to the RAN Al 110 to start execution of the RAN Al function. Basically, since prediction using the RAN Al function is more accurate than prediction based on the execution status of the vRAN, by executing the RAN Al function, whether or not the vRAN is congested can be predicted with higher accuracy. When the vRAN is determined to be congested by the RAN AI function, the control device 100 executes a measure. As one measure, the control device 100 executes offload processing in which the mobile communication terminal is handed over from the wireless communication cell served by said vRAN, for example, or the like. In this manner, the possibility that the quality of the wireless communication service provided to the mobile communication terminal is lowered due to congestion of the vRAN can be reduced. As another measure, the control device 100 stops the assignment of resources of the GPU 104 to the RAN Al function, for example, and assign that amount to the vRAN function. In this manner, the processing capability of the vRAN function can be enhanced, and a contribution can be made to prevent the occurrence of congestion to reduce the degree of congestion. The control device 100 may execute a measure according to the remaining amount of wireless resources. For example, when the remaining amount of wireless resources is larger than a predetermined threshold, the control device 100 stops the assignment of resources of the GPU 104 to the RAN Al function and assigns that amount to the vRAN function, and when the remaining amount of wireless resources is less than the threshold, executes offload processing in which the mobile communication terminal is handed over from a wireless communication cell served by said vRAN, or the like. If the remaining amount of wireless resources is large, the number of accommodated mobile communication terminals can be increased by assigning resources of the GPU 104 to the vRAN function to contribute to a reduction in the congestion, but when the remaining amount of wireless resources is less, even if resources of the GPU 104 are assigned to the vRAN function, the number of accommodated mobile communication terminals cannot be increased, and therefore may not be a sufficient measure for the congestion. With the control device 100, a control taking such circumstances into account can be achieved.

In addition, for example, the control device 100 usually assigns resources of the CPU 102 and a part of the resources of the GPU 104 to the vRAN 108 to execute the vRAN function, and assigns resources of the GPU 104, the amount of which being less than the assigned amount of resources of the GPU 104 to the vRAN 108, to the RAN Al 110 to execute the RAN AI function. The control device 100 predicts, by the RAN Al function, whether the vRAN is to be congested. When the vRAN is determined by the RAN Al function to be congested, the control device 100 may execute a measure. As one measure, the control device 100 executes offload processing in which the mobile communication terminal is handed over from the wireless communication cell served by said vRAN, for example, or the like. As another measure, the control device 100 stops the assignment of resources of the GPU 104 to the RAN Al function, for example, and assign that amount to the vRAN function. The control device 100 may execute a measure according to the remaining amount of wireless resources. For example, when the remaining amount of wireless resources is larger than a predetermined threshold, the control device 100 stops the assignment of resources of the GPU 104 to the RAN Al function and assigns that amount to the vRAN function, and when the remaining amount of wireless resources is less than the threshold, executes offload processing in which the mobile communication terminal is handed over from a wireless communication cell served by said vRAN, or the like.

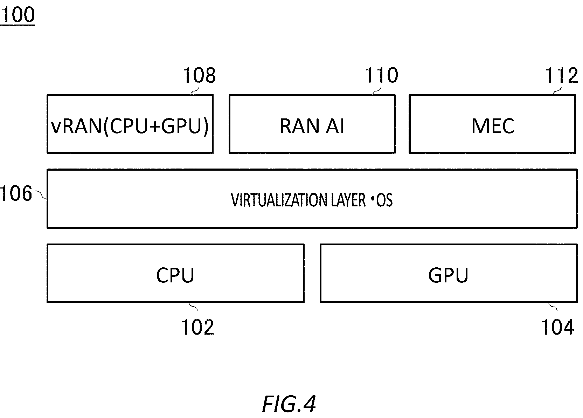

Fig. 4 schematically illustrates an example of a configuration of a control device 100 according to the present embodiment. Here, different points from Fig. 3 are mainly described. The control device 100 in the present example further executes a function of an MEC 112 (which may be described as an MEC function), in addition to the vRAN function and the RAN Al function.

The MEC function may be an example of a service provision function, which is a function to provide a service to a mobile communication terminal that accesses the vRAN. The service provided by the service provision function may be any service, and may include as examples, but is not limited to, a service for analyzing various types of data such as still image data, moving image data, voice data, text data, and sensor data, a service for executing processing according to the analysis result, an authentication service, an autonomous-driving related service and the like.

The control device 100 may preferentially assign resources of the GPU 104 to the vRAN 108, the RAN Al 110, the MEC 112 in this order, among the vRAN 108, the RAN Al 110, and the MEC 112. That is, control device 100 may set the highest priority to the vRAN 108, followed by the RAN Al 110 , and then the MEC 112.

For example, the control device 100 usually assigns resources of the CPU 102 and resources of the GPU 104 to the vRAN function to execute the vRAN function, and when processing load of the GPU 104 becomes lower than a predetermined threshold, increases an amount of resources of the GPU 104 to be assigned to the RAN Al 110 to start execution of the RAN Al function. Then, when the amount of unused resources of the GPU 104 becomes greater than a predetermined threshold, the control device 100 assigns resources of the GPU 104 to the MEC 112 to execute the MEC function. In this manner, the RAN Al function can e executed when the load of the vRAN function is low while stably executing the vRAN function, and when there is still excess resources of the GPU 104, the MEC function can be executed. Improvement of quality of service or the like can be achieved by the RAN Al function while providing a stable communication service to the mobile communication terminals that access the vRAN by stably executing the vRAN function, and the MEC service can also be provided.

**In** addition, for example, the control device 100 usually assigns resources of the CPU 102 and a part of resources of the GPU 104 to the vRAN 108 to execute the vRAN function, assigns resource of the GPU 104, the amount of which being less than the assigned amount of resources of the GPU 104 to the vRAN 108, to the RAN Al 110 to execute the RAN Al function, and assigns resources of the GPU 104, the amount of which being less than the assigned amount of resources of the GPU 104 to the RAN Al 110, to the MEC 112 to execute the MEC function. When the processing load of the vRAN function is lowered, the control device 100 then increases the assigned amount of resources of the GPU 104 to the RAN Al 110 and the assigned amount of resources of the GPU 104 to the MEC 112. In this manner, while stably executing the vRAN function, improvement of quality of service provided by the RAN Al function and provision of service by the MEC function can be achieved, and enhancement of the RAN Al function and the MEC function can be achieved when the load of the vRAN function is low. The control device 100 may monitor the processing load of the vRAN 108, and when the processing load of the vRAN 108 is higher than a predetermined threshold, reduce the assigned amount of resources of the GPU 104 to the MEC 112 and assign that amount to the vRAN 108.

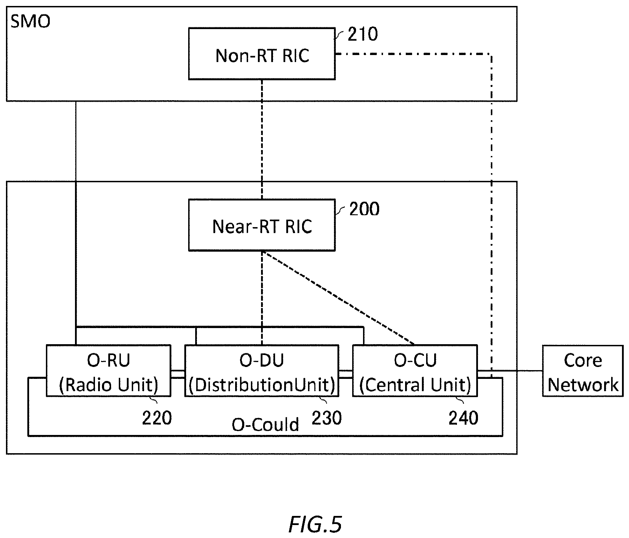

Fig. 5 schematically illustrates an example of a configuration of a control device 100 according to the present embodiment. The control device 100 may function as a Near-RT RIC 200. In Fig. 5, the Near-RT RIC 200 is achieved through the control device 100.

In the example illustrated in Fig. 5, the Non-RT RIC 210 is located inside an SMO (Service Management and Orchestration) that performs management and orchestration of the RAN. The Non-RT RIC 210 performs generation and notification of a policy concerning control of the RAN, and transmission of information to the Near-RT RIC 200. For example the Non-RT RIC 210 generates a trained model related to the RAN control by executing machine learning using data collected from the RAN, and transmits it to the Near-RT RIC 200.

The Near-RT RIC 200 is located closer to the RAN node (O-RU 220, O-DU 230, O-CU 240), compared to the Non-RT RIC 210, and performs control of the RAN node, control of resources and the like. The Near-RT RIC 200 executes processing with high real-timeliness, as compared to the Non-RT RIC 210.

The Near-RT RIC 200 according to the present embodiment executes, by using resources of the GPU 104, inference processing related to control of the RAN using a trained model acquired from the Non-RT RIC 210, for example. Although GPU is not utilized in existing Near-RT RICs, the Near-RT RIC 200 according to the present embodiment has a GPU 104, and executes inference processing using the GPU 104. The GPU 104 with high processing capability for parallel processing and inference processing using the trained model has high compatibility, and thus, the inference processing can be accelerated by executing, by the Near-RT RIC 200, inference processing using the GPU 104.

Usually, there will be no problem if a trained model is generated by executing training at the Non-RT RIC 210, and inference processing using said trained model is executed by the Near-RT RIC 200. However, since the training by the Non-RT RIC 210 is low in its real-timeliness, it may be difficult to address the status change in real-time. For example, when the Non-RT RIC 210 had generated a trained model for control of the vRAN in for a case where an event of increase in the communication amount by the mobile communication terminals occurs, when a similar event occurs, an appropriate control can be achieved by executing, by the Near-RT RIC 200, inference processing using said trained model to perform control of the vRAN. However, the occurrence status of traffic may vary depending on the type, location, and size or the like of the event, and there may be cases where it cannot be addressed with said trained model, depending on the event. In comparison, for example, the Near-RT RIC 200 updates the trained model acquired from the Non-RT RIC 210 by executing machine learning using data related to the vRAN collected in real-time, and executes inference using the updated trained model, for example. In this manner, the trained model can be updated to adapt to the occurrence status of traffic in the event that has occurred at the moment, and can contribute to achieving an appropriate control.

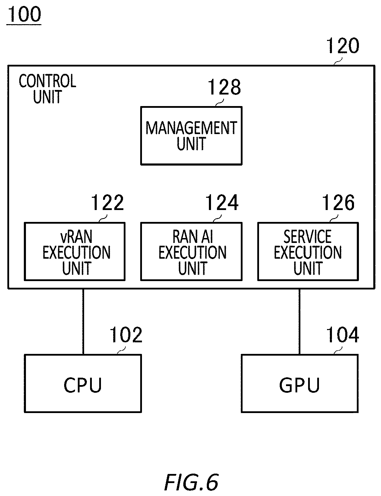

Fig. 6 schematically illustrates an example of a functional configuration of a control device 100. The control device 100 includes the CPU 102, the GPU 104, and a control unit 120. The control unit 120 includes a vRAN execution unit 122, a RAN Al execution unit 124, a service execution unit 126, and a management unit 128. The control unit 120 may not include the service execution unit 126.

The vRAN execution unit 122 executes the vRAN function. The vRAN execution unit 122 executes the vRAN function by using resource of the CPU 102 and resources of the GPU 104.

The RAN Al execution unit 124 executes the RAN AI function. The RAN Al execution unit 124 executes the RAN Al function by using resources of the GPU 104.

The service execution unit 126 executes a service provision function, which is a function of providing a service to mobile communication terminals that access the vRAN. The service execution unit 126 executes the MEC function, for example. The service execution unit 126 executes the service provision function by using resources of the GPU 104.

The management unit 128 manages the vRAN execution unit 122, the RAN AI execution unit 124, and the service execution unit 126. The management unit 128 may manage assignment of resources of the CPU 102 and resources of the GPU 104 to the vRAN execution unit 122, the RAN Al execution unit 124, and the service execution unit 126.

For example, the management unit 128 performs management such that resources of the GPU 104 is preferentially assign to the vRAN execution unit 122, among the vRAN execution unit 122 and the RAN Al execution unit 124.

For example, the management unit 128 monitors the processing load of the GPU 104 when the vRAN function is executed by the vRAN execution unit 122 by using the CPU 102 and the GPU 104, and increases the amount of resources of the GPU 104 to be assigned to the RAN Al execution unit 124 when the processing load of the GPU 104 becomes lower than a predetermined threshold.

As one specific example, the management unit 128 firstly assigns resources of the CPU 102 and resources of the GPU 104 to the vRAN execution unit 122 to execute the vRAN function, and set the RAN Al execution unit 124 to be in a state where it is caused not to execute the RAN AI function. The management unit 128 then monitors the processing load of the GPU 104, and when the processing load of the GPU 104 becomes lower than the predetermined threshold, assigns resources of the GPU 104 to the RAN AI execution unit 124 to cause the RAN AI execution unit 124 to start execution of the RAN Al function.

As another specific example, the management unit 128 firstly assigns resources of the CPU 102 and resources of the GPU 104 to the vRAN execution unit 122 to execute the vRAN function, and assigns resources of the GPU 104, the amount of which being less than the amount assigned to the vRAN execution unit 122, to the RAN Al execution unit 124 to execute the RAN AI function. The management unit 128 then monitors the processing load of the GPU 104, and when the processing load of the GPU 104 becomes lower than the predetermined threshold, adds resources of the GPU 104 to the RAN Al execution unit 124 to enhance the RAN Al function.

In a case where the processing load of the vRAN execution unit 122 is higher than the predetermined threshold, when the processing load for signal processing of the physical layer by the vRAN execution unit 122 is determined to be higher than the predetermined threshold, the management unit 128 may increase the amount of resources of the GPU 104 to be assigned to the vRAN execution unit 122. In a case where the processing load of the vRAN execution unit 122 is higher than the predetermined threshold, when the processing load for connection processing, by the vRAN execution unit 122, for a connection request from a mobile communication terminal at the vRAN is determined to be higher than a predetermined threshold, the management unit 128 may increase the amount of resources of the GPU 104 to be assigned to the RAN Al execution unit 124. If the cause of the processing load of the vRAN execution unit 122 being high is because the processing load for signal processing of the physical layer is high, enhancing parallel processing of the vRAN can contribute to a reduction in the processing load of the vRAN execution unit 122. On the other hand, if the cause of the processing load of the vRAN execution unit 122 being high is because the processing load for connection processing is high, enhancing parallel processing of the vRAN cannot sufficiently contribute to a reduction in the processing load of the vRAN execution unit 122. With the management unit 128, management that takes such circumstances into account can be achieved, and effective distribution of resources of the GPU 104 can be enabled.

When the vRAN is predicted to be congested when the vRAN function is executed by the vRAN execution unit 122 by using resources of the CPU 102 and resources of the GPU 104, the management unit 128 may increase the amount of resources of the GPU 104 to be assigned to the RAN AI execution unit 124.

As one specific example, the management unit 128 firstly assigns resources of the CPU 102 and resources of the GPU 104 to the vRAN execution unit 122 to execute the vRAN function, and set the RAN Al execution unit 124 to be in a state where it is caused not to execute the RAN AI function. The management unit 128 then predicts whether or not the vRAN is to be congested based on the execution status of the vRAN. The management unit 128 predicts whether or not the vRAN is to be congested from a traffic pattern in the vRAN, for example. The management unit 128 may predict whether or not the vRAN is to be congested based on the status of a plurality of vRANs. For example, when the handover of the mobile communication terminal to a wireless communication cell managed by a target vRAN from a wireless communication cell managed by another vRAN tends to increase, the management unit 128 predicts that the target vRAN is to be congested. When the vRAN is predicted to be congested, the management unit 128 increases the amount of resources of the GPU 104 to be assigned to the RAN Al execution unit 124 to start execution of the RAN AI function. When the vRAN is determined to be congested by the RAN Al function, the management unit 128 executes a measure. As one measure, the management unit 128 performs control such that offload processing is executed in which the mobile communication terminal is handed over from a wireless communication cell served by said vRAN, for example. As another measure, the management unit 128 performs control such that the assignment of resources of the GPU 104 to the RAN Al execution unit 124 is stopped, and that amount is assigned to the vRAN execution unit 122, for example. The management unit 128 may execute a measure according to the remaining amount of wireless resources at the vRAN. For example, the management unit 128 stops the assignment of resources of the GPU 104 to the RAN Al execution unit 124 and assigns that amount to he vRAN execution unit 122 when the remaining amount of wireless resources is greater than a predetermined threshold, and performs control such that offload processing is executed in which mobile communication terminals are handed over from the wireless communication cell served by said vRAN when the remaining amount of wireless resources is less than the threshold.

As another specific example, the management unit 128 firstly assigns resources of the CPU 102 and resources of the GPU 104 to the vRAN execution unit 122 to execute the vRAN function, and assigns resources of the GPU 104, the amount of which being less than the amount assigned to the vRAN execution unit 122, to the RAN Al execution unit 124 to execute the RAN AI function. The management unit 128 predicts whether or not the vRAN is to be congested by the RAN Al function. When the vRAN is determined to be congested by the RAN Al function, the management unit 128 may execute a measure. As one measure, the management unit 128 performs control such that offload processing is executed in which the mobile communication terminal is handed over from a wireless communication cell served by said vRAN, for example. As another measure, the management unit 128 performs control such that the assignment of resources of the GPU 104 to the RAN Al function is stopped and that amount is assigned to the vRAN function, for example. The management unit 128 may execute a measure according to the remaining amount of wireless resources. For example, the management unit 128 stops the assignment of resources of the GPU 104 to the RAN Al execution unit 124 and assigns that amount to he vRAN execution unit 122 when the remaining amount of wireless resources is greater than a predetermined threshold, and performs control such that offload processing is executed in which mobile communication terminals are handed over from the wireless communication cell served by said vRAN when the remaining amount of wireless resources is less than the threshold.

For example, the management unit 128 performs management such that resources of the GPU 104 are preferentially assigned to the vRAN execution unit 122, the RAN Al execution unit 124, the service execution unit 126 in this order, among the vRAN execution unit 122, the RAN AI execution unit 124, and the service execution unit 126. That is, the management unit 128 sets the highest priority to the vRAN execution unit 122,
followed by the RAN Al execution unit 124, and then the service execution unit 126.

For example, the management unit 128 assigns resources of the CPU 102 and resources of the GPU 104 to the vRAN execution unit 122 to execute the vRAN function, and monitors the processing load of the GPU 104. When the processing load of the GPU 104 becomes lower than the predetermined threshold, the management unit 128 increases the amount of resources of the GPU 104 to be assigned to the RAN Al execution unit 124 to start execution of the RAN AI function. The management unit 128 then monitors the amount of unused resources of the GPU 104, and when the amount of unused resources is greater than a predetermined threshold, assigns resources of the GPU 104 to the service execution unit 126 to execute the service provision function.

For example, the management unit 128 assigns resources of the CPU 102 and resources of the GPU 104 to the vRAN execution unit 122 to execute the vRAN function, assigns resources of the GPU 104, the amount of which being less than the assigned amount of resources of the GPU 104 to the vRAN execution unit 122, to the RAN Al execution unit 124 to execute the RAN Al function, and assigns resources of the GPU 104, the amount of which being less than the assigned amount of resources of the GPU 104 to the RAN Al execution unit 124, to the service execution unit 126 to execute the service provision function. The management unit 128 then monitors the processing load of the vRAN execution unit 122, and when the processing load of the vRAN execution unit 122 is lower than a predetermined threshold, increases the assigned amount of resources of the GPU 104 to the RAN Al execution unit 124, or increases the assigned amount of resources of the GPU 104 to the RAN Al execution unit 124 and the service execution unit 126. Further, when the processing load of he vRAN execution unit 122 is higher than the predetermined threshold, the management unit 128 reduces the assigned amount of resources of the GPU 104 to the service execution unit 126, or to the service execution unit 126 and the RAN Al execution unit 124, and assigns that amount to the vRAN execution unit 122.

In a case where the control device 100 functions as the Near-RT RIC, the RAN Al execution unit 124 may execute, by using resources of the GPU 104, inference processing related to control of the vRAN using a trained model acquired from the Non-RT RIC. For example, the Non-RT RIC collects, from the RAN node, various types of data such as a PM counter (Performance Management counter), FM data (Fault Management data), and TM data (Trace Management data), and by executing machine learning using the collected data, generates a trained model that plays a role of a policy concerning the RAN control. The control device 100 acquires said trained model from the Non-RT RIC, and executes control of the RAN node using said trained model and the data collected from the RAN node.

The RAN Al execution unit 124 may update the trained model acquired from the Non-RT RIC by executing machine learning using the data related to the vRAN, and execute inference processing using the updated trained model. The RAN AI execution unit 124 may update the trained model acquired from the Non-RT RIC by fine-tuning it by using the data related to the vRAN, for example. For example, the RAN AI execution unit 124 updates the trained model acquired from the Non-RT RIC by executing machine learning, using various types of data collected from the RAN node at a shorter cycle than the Non-RT RIC, and executes control of the RAN node using the updated trained model and the data collected from the RAN node.

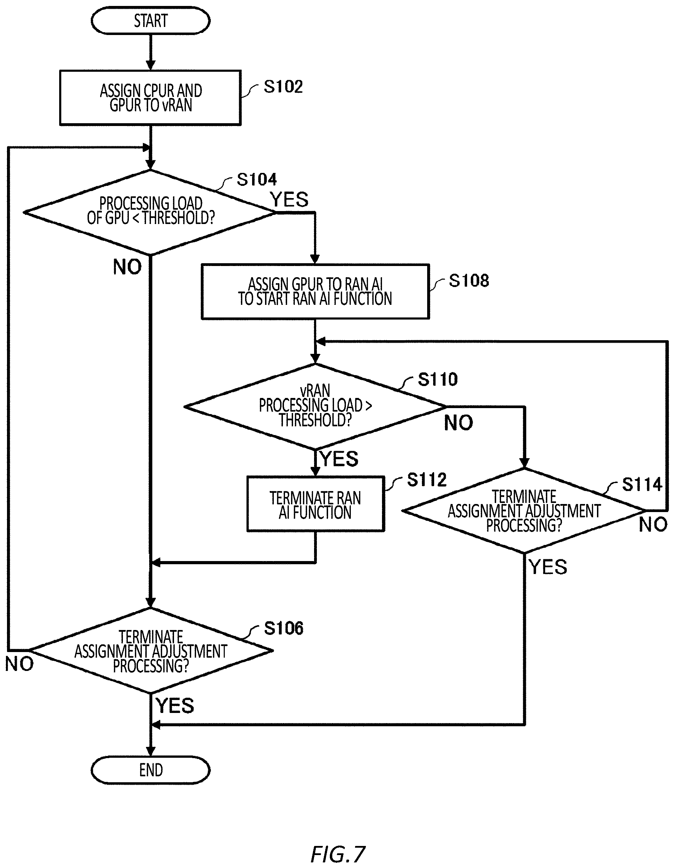

FIG. 7 schematically illustrates an example of a flow of the processing performed by the control device 100. Here, a flow of the processing in a case where the control device 100 usually executes the vRAN function by using resources of the CPU 102 (which may be described as CPURs) and resources of the GPU 104 (which may be described as GPURs), and executes the RAN Al function when the processing load of the GPU 104 is schematically illustrated.

At step (the step may be described by abbreviating it as S) 102, the management unit 128 assigns CPURs and GPURs to the vRAN execution unit 122 to cause the vRAN execution unit 122 to execute the vRAN function. The management unit 128 continuously monitors the processing load of the GPU 104.

At S104, the management unit 128 determines whether or not the processing load of the GPU 104 is lower than a predetermined threshold. When it is determined not to be low, the process proceeds to S106, and when it is determined to be low, the process proceeds to S108.

At S106, the management unit 128 determines whether or not the assignment adjustment processing is to be terminated. The management unit 128 determines that the assignment adjustment processing is to be terminated when an instruction, by an administrator or the like of the control device 100, to terminate the assignment adjustment processing has been received. When the assignment adjustment processing is terminated, the control device 100 will execute the vRAN function by the vRAN execution unit 122 without executing the RAN Al function or the service provision function. When it is determined not to be terminated, the process returns to S104.

At S108, the management unit 128 assigns the GPURs to the RAN Al execution unit 124 to start execution of the RAN AI function. The management unit 128 continuously monitors the processing load of the vRAN execution unit 122.

At S110, the management unit 128 determines whether or not the processing load of the vRAN execution unit 122 is higher than a predetermined threshold. When it is determined to be high, the process proceeds to S112, and when it is determined not to be high, the process proceeds to S114.

At S114, the management unit 128 determines whether or not the assignment adjustment processing is to be terminated. When it is determined to be terminated, the assignment adjustment processing is terminated, and when it is determined not to be terminated, the process returns to S110.

At S112, the management unit 128 causes the RAN AI execution unit 124 to terminate execution of the RAN AI function. The management unit 128 may assign, to the vRAN execution unit 122, the GPURs that had been assigned to the RAN AI execution unit 124.

Although, in the above-described embodiment, cases where the control device 100 assigns resources of the GPU 104 included in the control device 100 itself to the vRAN function, to the RAN Al function, or to the service provision function has been mainly described as examples, it is not limited thereto. The control device 100 may assign resources of a plurality of GPUs 104 arranged in a distributed manner to the vRAN function, to the RAN AI function or to the service provision function. The control device 100 may use resources of the plurality of GPUs 104 arranged in a distributed manner within a data center by taking into account the processing load of said plurality of GPUs 104 or the usage status of the resources, for example.

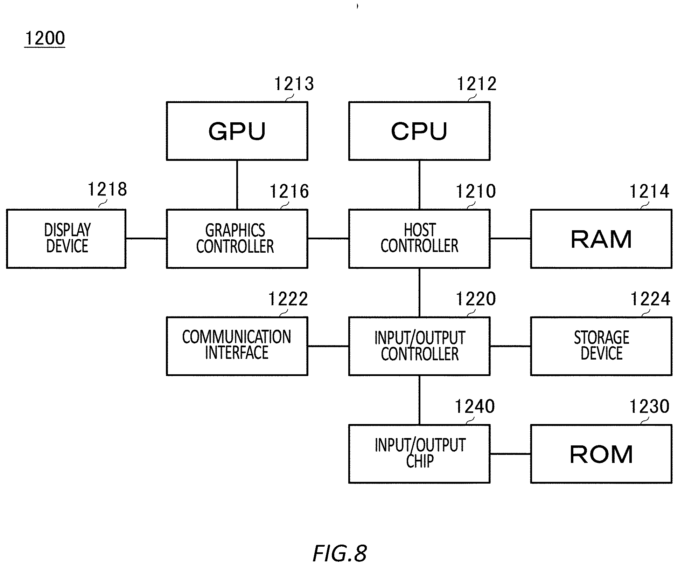

Fig. 8 schematically illustrates an example of a hardware configuration of a computer 1200 that functions as the control device 100. A program installed in the computer 1200 can cause the computer 1200 to function as one or more "units" of an apparatus according to the present embodiment, or cause the computer 1200 to perform operations associated with the apparatus or perform said one or more "units" thereof according to the present embodiment, and/or cause the computer 1200 to perform the process according to the present embodiment or perform the steps of the said process. Such a program may be executed by a CPU 1212 to cause the computer 1200 to perform particular operations associated with some or all of the blocks in the flowcharts and block diagrams described in the present specification.

The computer 1200 according to the present embodiment includes the CPU 1212, a GPU 1213, a RAM 1214, and a graphics controller 1216, which are connected to one another via a host controller 1210. The computer 1200 also includes a communication interface 1222, a storage device 1224, a DVD drive 1226, and an input/output unit such as an IC card drive, which are connected to the host controller 1210 via an input/output controller 1220. The DVD drive 1226 may be a DVD-ROM drive, a DVD-RAM drive, and the like. The storage device 1224 may be a hard disk drive, a solid-state drive, and the like. The computer 1200 also includes a ROM 1230 and a legacy input/output unit such as a keyboard, which are connected to the input/output controller 1220 via an input/output chip 1240.

The CPU 1212 operates in accordance with the programs stored in the ROM 1230 and the RAM 1214, thereby controlling each unit. The graphics controller 1216 acquires image data which is generated by the CPU 1212 in a frame buffer or the like provided in the RAM 1214 or in itself so as to cause the image data to be displayed on a display device 1218.

The communication interface 1222 communicates with other electronic devices via a network. The storage device 1224 stores a program and data used by the CPU 1212 in the computer 1200. The DVD drive 1226 is configured to read the programs or the data from the DVD-ROM 1227 or the like, and to provide the storage device 1224 with the programs or the data. The IC card drive reads the program and data from an IC card, and/or writes the program and data to the IC card.

The ROM 1230 stores therein a boot program or the like executed by the computer 1200 at the time of activation, and/or a program depending on the hardware of the computer 1200. The input/output chip 1240 may also connect various input/output units via a USB port, a parallel port, a serial port, a keyboard port, a mouse port, or the like to the input/output controller 1220.

A program is provided by a computer-readable storage medium such as the DVD-ROM 1227 or the IC card. The program is read from the computer-readable storage medium, installed into the storage device 1224, RAM 1214, or ROM 1230, which are also examples of a computer-readable storage medium, and executed by the CPU 1212. Information processing written in these programs is read by the computer 1200, and provides cooperation between the programs and the various types of hardware resources described above. An apparatus or method may be configured by achieving the operation or processing of information in accordance with the usage of the computer 1200.

For example, when a communication is performed between the computer 1200 and an external device, the CPU 1212 may execute a communication program loaded in the RAM 1214 and instruct the communication interface 1222 to perform communication processing based on a process written in the communication program. The communication interface 1222, under control of the CPU 1212, reads transmission data stored on a transmission buffer region provided in a recording medium such as the RAM 1214, the storage device 1224, the DVD-ROM 1227, or the IC card, and transmits the read transmission data to a network or writes reception data received from a network to a reception buffer region or the like provided on the recording medium.

In addition, the CPU 1212 may be configured to cause all or a necessary portion of a file or a database, which has been stored in an external recording medium such as the storage device 1224, the DVD drive 1226 (DVD-ROM 1227), the IC card and the like, to be read into the RAM 1214, thereby executing various types of processing on the data on the RAM 1214. Next, the CPU 1212 may write the processed data back into the external recording medium.

Various types of information, such as various types of programs, data, tables, and databases, may be stored in the recording medium to undergo information processing. The CPU 1212 may execute, on the data read from the RAM 1214, various types of processing including various types of operations, information processing, conditional judgement, conditional branching, unconditional branching, information search/replacement, or the like described throughout the present disclosure and designated by instruction sequences of the programs, to write the results back to the RAM 1214. In addition, the CPU 1212 may search for information in a file, a database, or the like in the recording medium. For example, when a plurality of entries, each having an attribute value of a first attribute associated with an attribute value of a second attribute, are stored in the recording medium, the CPU 1212 may search for an entry whose attribute value of the first attribute matches a designated condition, from among the said plurality of entries, and read the attribute value of the second attribute stored in the said entry, thereby acquiring the attribute value of the second attribute associated with the first attribute that satisfies a predetermined condition.

The above described program or software modules may be stored in the computer-readable storage medium on or near the computer 1200. In addition, a recording medium such as a hard disk or a RAM provided in a server system connected to a dedicated communication network or the Internet can be used as the computer-readable storage medium, thereby providing the program to the computer 1200 via the network.

Blocks in flowcharts and block diagrams in the present embodiments may represent steps of processes in which operations are executed or "units" of apparatuses responsible for executing operations. A specific step and "unit" may be implemented by a dedicated circuit, a programmable circuit supplied along with a computer-readable instruction stored on a computer-readable storage medium, and/or a processor supplied along with the computer-readable instruction stored on the computer-readable storage medium. The dedicated circuit may include a digital and/or analog hardware circuit, or may include an integrated circuit (IC) and/or a discrete circuit. The programmable circuit may include, for example, a reconfigurable hardware circuit including logical AND, logical OR, logical XOR, logical NAND, logical NOR, and another logical operation, and a flip-flop, a register, and a memory element, such as a field programmable gate array (FPGA), a programmable logic array (PLA), or the like.

The computer-readable storage medium may include any tangible device capable of storing an instruction executed by an appropriate device, so that the computer-readable storage medium having the instruction stored thereon constitutes a product including an instruction that may be executed in order to provide means for executing an operation designated by a flowchart or a block diagram. An example of the computer-readable storage medium may include an electronic storage medium, a magnetic storage medium, an optical storage medium, an electromagnetic storage medium, a semiconductor storage medium, etc. A more specific example of the computer-readable storage medium may include a floppy (registered trademark) disk, a diskette, a hard disk, a random access memory (RAM), a read-only memory (ROM), an erasable programmable read-only memory (EPROM or flash memory), an electrically erasable programmable read-only memory (EEPROM), a static random access memory (SRAM), a compact disk read-only memory (CD-ROM), a digital versatile disk (DVD), a Blu-ray (registered trademark) disk, a memory stick, an integrated circuit card, or the like.

The computer-readable instructions may include an assembler instruction, an instruction-set-architecture (ISA) instruction, a machine instruction, a machine-dependent instruction, a microcode, a firmware instruction, state-setting data, or either of source code or object code written in any combination of one or more programming languages including an object-oriented programming language such as Smalltalk (registered trademark), JAVA (registered trademark), and C++, or the like, and a conventional procedural programming language such as a "C" programming language or a similar programming language.

The computer-readable instruction may be provided to a general purpose computer, a special purpose computer, or a processor or programmable circuit of another programmable data processing apparatus locally or via a local area network (LAN), a wide area network (WAN) such as the Internet or the like in order that the general purpose computer, the special purpose computer, or the processor or the programmable circuit of another programmable data processing apparatus executes the computer-readable instruction to generate means for executing operations designated by the flowchart or the block diagram. Examples of the processor include a computer processor, a processing unit, a microprocessor, a digital signal processor, a controller, a microcontroller, and the like.

While the present invention has been described by way of the embodiments, the technical scope of the present invention is not limited to the above-described embodiments. It is apparent to persons skilled in the art that various alterations or improvements can be added to the above-described embodiments. It is also apparent from the scope of the claims that the embodiments added with such alterations or improvements can be included in the technical scope of the invention.

The operations, procedures, steps, and stages of each process executed by a device, system, program, and method shown in the claims, embodiments, or diagrams can be achieved in any order as long as the order is not indicated by "prior to," "before," or the like and as long as the output from a previous process is not used in a later process. Even if the process flow is described using phrases such as "first" or "next" in the claims, embodiments, or diagrams, it does not necessarily mean that the process must be executed in this order.

### EXPLANATION OF REFERENCES

12: CPU, 14: ACC, 16: virtualization layer ·OS, 18: vRAN, 20: RAN AI, 22: GPU server, 24: RAN AI, 100: control device, 102: CPU, 104: GPU, 106: virtualization layer • OS, 108: vRAN, 110: RAN Al, 112: MEC, 120: control unit, 122: vRAN execution unit, 124: RAN Al execution unit, 126: service execution unit, 128: management unit, 200: Near-RT RIC, 210: Non-RT RIC, 220: O-RU, 230: O-DU, 240: O-CU, 1200: computer, 1210: host controller, 1212: CPU, 1213: GPU, 1214: RAM, 1216: graphics controller, 1218: device, 1220: input/output controller, 1222: communication interface, 1224: storage device, 1230: ROM, 1240: input/output chip.

## Claims

1. A control device comprising:
a vRAN execution unit that executes a vRAN function, which is a function of a vRAN (Virtual Radio Access Network), by using resources of a CPU (Central Processing Unit) and resources of a GPU (Graphics Processing Unit); and
a RAN Al execution unit that executes a RAN AI function, which is an Al function related to control of the vRAN, by using resources of the GPU.

2. The control device according to claim 1, comprising:
a management unit that performs management such that resources of the GPU are preferentially assigned to the vRAN execution unit, among the vRAN execution unit and the RAN Al execution unit.

3. The control device according to claim 2, wherein the management unit monitors processing load of the GPU when the vRAN execution unit executes the vRAN function by using the CPU and the GPU, and when the processing load of the GPU becomes lower than a predetermined threshold, increases an amount of resources of the GPU to be assigned to the RAN Al execution unit.

4. The control device according to claim 2, wherein in a case where processing load of the vRAN execution unit is higher than a predetermined threshold, the management unit increases an amount of resources of the GPU to be assigned to the vRAN execution unit when processing load for signal processing of a physical layer by the vRAN execution unit is determined to be higher than a predetermined threshold, and increases an amount of resources of the GPU to be assigned to the RAN Al execution unit when processing load for connection processing, by the vRAN execution unit, for a connection request from a mobile communication terminal at the vRAN is determined to be higher than a predetermined threshold.

5. The control device according to claim 2, wherein the management unit increases an amount of resources of the GPU to be assigned to the RAN Al execution unit in a case where the vRAN is predicted to be congested when the vRAN execution unit is executing the vRAN function by using resources of the CPU and resources of the GPU.

6. The control device according to claim 1, wherein
the control device functions as a Near-RT RIC (RAN Intelligent Controller), and
the RAN Al execution unit executes, by using resources of the GPU, inference processing related to control of the vRAN using a trained model acquired from a Non-RT RIC.

7. The control device according to claim 6, wherein the RAN AI execution unit updates the trained model by executing machine learning using data related to the vRAN, and executes the inference processing using the trained model that is updated.

8. The control device according to claim 2, comprising:
a service execution unit that executes, by using resources of the GPU, a service provision function, which is a function of providing service for a mobile communication terminal that accesses the vRAN,
wherein the management unit performs control such that resources of the GPU are preferentially assigned to the vRAN execution unit, the RAN AI execution unit, and the service execution unit in this order, among the vRAN execution unit, the RAN Al execution unit, and the service execution unit.

9. A program that causes a computer to function as the control device according to claim 1.

10. A system comprising:
the control device according to claim 1;
the CPU; and
the GPU.
